Europäisches Patentamt

European Patent Office                    (11) Numéro de publication: **0 176 413**
                                                                    **B1**
Office européen des brevets

(12)                    **FASCICULE DE BREVET EUROPEEN**

(45) Date de publication du fascicule du brevet:          (51) Int. Cl.⁴: **H 02 M 3/335**
   **26.07.89**

(21) Numéro de dépôt: **85401725.8**

(22) Date de dépôt: **05.09.85**

(54) Convertisseur de courant continu en courant continu à découpage.

(30) Priorité: **05.09.84 FR 8413668**

(43) Date de publication de la demande:
   **02.04.86 Bulletin 86/14**

(45) Mention de la délivrance du brevet:
   **26.07.89 Bulletin 89/30**

(84) Etats contractants désignés:
   **DE GB IT NL**

(56) Documents cités:
   **EP-A- 0 057 083**
   **DE-A- 2 445 080**
   **GB-A- 2 056 794**

(73) Titulaire: **MATRA, 4 rue de Presbourg, F-75116 Paris (FR)**

(72) Inventeur: **Guilhem, Hughes, 37, avenue Louis Bréguet,**
   **F-78140 Velizy (FR)**
   Inventeur: **Matt, Jean-Claude, 37, avenue Louis Bréguet,**
   **F-78140 Velizy (FR)**

(74) Mandataire: **Fort, Jacques et al, CABINET**
   **PLASSERAUD 84, rue d'Amsterdam, F-75009 Paris (FR)**

ACTORUM AG

**Description**

L'invention concerne les convertisseurs de courant continu en courant continu à découpage, du type comportant un transformateur dont le secondaire, destiné à alimenter une charge, est muni d'un redresseur et dont le primaire est prévu pour être relié à une source de tension continue par l'intermédiaire de moyens de commutation statiques permettant de moduler en rapport cyclique la tension appliquée au primaire (le rapport cyclique D étant défini par $D = t_1/(t_1 + t_2)$, $t_1$ étant le temps de conduction et $t_2$ le temps de non conduction), par des moyens de commande.

On connaît déjà des convertisseurs du type général ci-dessus défini. Ils comportent en général un circuit de régulation de la tension de sortie, qui peut notamment utiliser une commande du rapport cyclique d'ouverture des moyens de commutation statiques, en réponse à une tension d'erreur prélevée au secondaire du transformateur. La modification du rapport cyclique peut être effectuée en donnant aux impulsions de courant appliquées au primaire une largeur fixe et en commandant la fréquence d'application des impulsions (US-A-4 257 089). Celui décrit dans le document EP-A0 057 083 comporte des moyens de commutation constitués par un transistor placé en série avec le primaire et commandé par un signal d'erreur prélevé en aval du redresseur.

De nombreuses applications exigent la recherche d'un rendement élevé et d'une puissance volumique ou massique également élevée. On a cherché à atteindre le premier résultat en réduisant la durée de basculement des moyens de commutation statiques, généralement constitués par un ou plusieurs transistors (US-A-4 312 029). Mais l'utilisation directe d'un transistor, comme organe commutateur pour couper le courant nominal de fonctionnement, conduit à des pertes de commutation très importantes, qui augmentent avec la fréquence de travail. En conséquence, on a adopté des fréquences de fonctionnement qui ne dépassent pas 100 à 200 kHz et exigent pourtant l'adjonction, au transistor, de réseaux d'aide à la commutation pour limiter les pertes.

L'invention vise à fournir un convertisseur de courant continu en courant continu du type ci-dessus défini répondant mieux que ceux antérieurement connus aux exigences de la pratique, notamment en ce qu'il présente des pertes réduites et est susceptible de fonctionner à des fréquences élevées, autorisant des puissances massiques supérieures à celles précédemment obtenues, du fait notamment de la réduction possible de la masse et du volume du tansformateur.

Dans ce but, l'invention propose notamment un convertisseur conforme à la partie caractérisante de la revendication 1.

L'élément de commutation statique sera généralement un transistor, et on utilisera souvent un transistor MOS. Cependant, on peut utiliser également des transistors bipolaires et même des thyristors rapides.

L'invention sera mieux comprise à la lecture de la description qui suit de modes particuliers d'exécution, donnés à titre d'exemples non limitatifs. La description se réfère aux dessins qui l'accopagnent, dans lesquels:

- la figure 1 est un schéma de principe d'un convertisseur constituant un premier mode d'exécution de l'invention,
- les figures 2A, 2B et 2C sont des diagrammes montrant respectivement la variation en fonction du temps de la tension $V_1$ aux bornes de l'élément de commutation du convertisseur de la figure 1, du courant $I_1$ traversant l'inductance associée à l'élément de commutation, et du signal de commande appliqué à l'élément de commutation.
- les figures 3 et 4, similaires à la figure 1, montrent des variantes de réalisation,
- la figure 5 montre une constitution possible du circuit de commande des figures 1 et 3,
- la figure 6, similaire à la figure 1 montre une variante de réalisation.

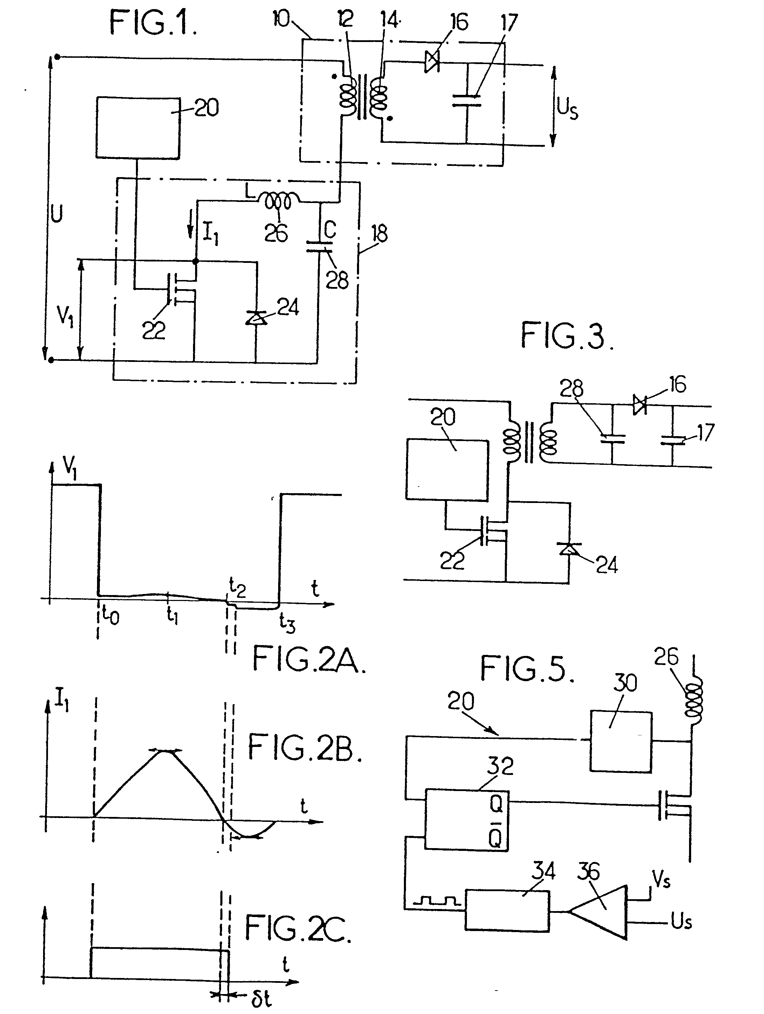

Le convertisseur continu-continu montré en figure 1 comporte, de façon classique, un ensemble 10 comprenant un transformateur 12,14, dont le secondaire 14 fournit la tension de sortie Us par l'intermédiaire d'un redresseur schématisé sous forme d'une diode 16 et d'un condensateur de filtrage 17.

Le primaire 12 du transformateur, qui peut être élévateur ou abaisseur de tension, est alimenté, à partir d'une source de tension continue U, par l'intermédiaire d'un commutateur électronique 18 associé à un circuit de commande 20 permettant de réguler la tension de sortie Us.

Le commutateur électronique 18 est prévu pour avoir des pertes faibles en commutation et pour pouvoir travailler à fréquence élevée. Il comporte un élément de commutation statique 22 formé, dans le mode de réalisation de la figure 1, par un transistor MOS rapide, qui peut être à canal P ou N. On pourrait toutefois utiliser également un transistor bipolaire rapide. L'électrode de commande de l'élément de commutation 22, c'est-à-dire la porte, est reliée au circuit de commande 20. Les électrodes de l'élément 22 reliées au circuit de puissance (source et drain) sont reliées par un élément à conduction unidirectionnelle 24 constituant élément de protection. Cet élément sera généralement une diode rapide, ayant un temps de recouvrement ne dépassant pas 50 nanosecondes environ dans le cas où l'on souhaite arriver à des fréquences de fonctionnement très élevées allant de 500 kHz à quelques MHz. Dans certains cas, la diode 24 peut être omise, la diode parasite inverse d'un transistor MOS suffisant à écouler le courant inverse.

L'élément de commutation 22 est associé à un circuit oscillant comportant une inductance 26 de valeur L et un condensateur 28 de capacité C. Dans la pratique, le condensateur aura généralement une capacité C de quelques nanofarads.

Le commutateur électronique 18 qui vient d'être décrit est susceptible d'être utilisé pour alimenter des charges de natures diverses, qui peuvent notamment être des ensembles 10 ayant une topologie différente de celle montrée sur la figure 1. Quant au circuit de commande 20, il peut également avoir des constitutions très diverses, à condition de fournir un signal de commande rectangulaire dont l'un des fronts est commandé par le passage à zéro du courant $I_1$ traversant l'inductance 26 et l'élément de commutation 22.

Le fonctionnement du convertisseur est le suivant:

L'élément 22 étant supposé initialement bloqué, le front montant du signal rectangulaire provenant du circuit 20 rend l'élément 22 conducteur. La tension $V_1$ à ses bornes tombe à une valeur proche de zéro. Au cours de la phase de mise en conduction, le courant $I_1$ reste très faible. Il augmente progressivement jusqu'à un instant $t_1$, puis diminue, s'annule à un instant $t_2$ et change de signe. Le courant de sens inverse traverse la diode 24 montée en parallèle avec l'élément 22.

Au cours de cette phase de courant négatif, jusqu'à un instant $t_3$, l'élément de commutation 22 est bloqué. Puis, le fonctionnement reprend au front montant suivant.

En réponse au changement de signe du courant $I_1$, le circuit 20, muni d'un capteur non représenté, ramène à zéro la tension de commande appliquée à l'élément de commutation 22. Cette tension de commande se présente donc sous forme d'un signal rectangulaire de l'instant $t_0$ à l'instant $r_2 + \delta t$ ($\delta t$ désignant le temps de réponse du circuit 20 au changement de signe de $I_1$).

On voit que la commutation intervient sensiblement à courant nul et que les pertes de blocage sont donc très faibles.

Le réseau LC (inductance 26 et condensateur) peut être ramené au secondaire du tarnsformateur. L'inductance 26 peut même être incorporée au secondaire 14, en créant sur cette dernière une inductance de fuite. On arrive ainsi au mode de réalisation montré en figure 3, où les organes déjà montrés en figure 1 portent le même numéro de référence.

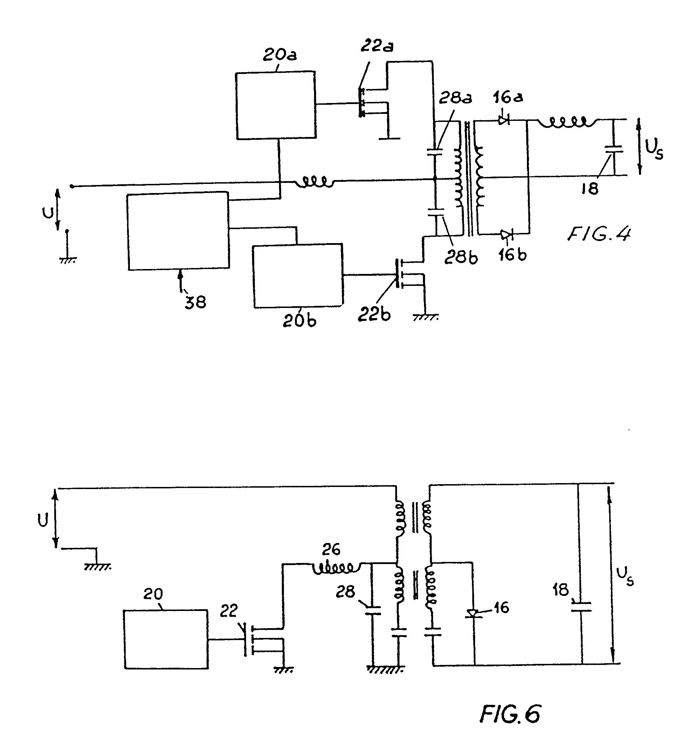

Le circuit de commande 20 peut, entre autres constitutions, avoir celle montrée à titre d'exemple en figure 5. Le circuit de la figure 5 comprend un détecteur de signe du courant 30, qui peut être de n'importe quel type classique, à condition d'avoir une réponse rapide, attaquant l'entrée de positionnement d'une bascule 32. L'entrée de rétablissement de la bascule 32 reçoit le signal de sortie d'un convertisseur tension/fréquence 34 et la sortie Q de la bascule attaque la porte du transistor MOS constituant l'élément de commutation 22. Dans le cas où la grandeur à réguler est constituée par la tension de sortie Us de l'ensemble 10, cette tension, ou une valeur qui lui est proportionnelle, est appliquée à l'entrée d'un amplificateur différentiel 36. L'autre entrée de l'amplificateur 36 est reliée à un générateur de tension de consigne Vs. Un tel circuit de commande fait varier la fréquence de fonctionnement, ce qui permet de donner au dispositif une plage de variations de la tension de sortie Us plus étendue que celle d'un système à découpage classique, à fréquence de découpage constante et à rapport cyclique variable.

Les modes de réalisation montrés en figures 1 et 3 comportent un seul commutateur. Il est également possible de réaliser des dispositifs à plusieurs commutateurs. La figure 4 donne un exemple de réalisation comportant deux jeux de moyens de commutation. Sur la figure 4, les organes correspondant à ceux des figures 1 et 3 portent le même numéro de référence, affectés d'un indice *a* pour l'un des jeux de moyens de commutation, de l'indice *b* pour l'autre. Le circuit de commande comporte un élément de synchronisation 38 commandant les circuits 20a et 20b en opposition de phases.

Il est évidemment possible de prévoir plus de deux jeux de moyens de commutation et également de prévoir plusieurs tensions de sortie.

Enfin, on peut réaliser, par juxtaposition de dispositifs du type qui vient d'être décrit, des convertisseurs réversibles deux ou quatre quadrants, permettant une circulation de puissance dans les deux sens.

L'invention est susceptible de très nombreuses applications, chaque fois qu'on recherche une puissance volumique élevée et un rendement satisfaisant. On peut notamment citer les applications au domaine spatial où la recherche d'une puissance massique élevée est un impératif. Mais, ce domaine n'est pas exclusif et l'invention est notamment applicable aux domaines aéronautique, militaire, informatique, de la mesure et des produits grands publics.

Enfin, plusieurs convertisseurs peuvent être placés en parallèle de façon à augmenter la puissance disponible, chacun des convertisseurs pouvant avoir la topologie dite Cùk à transport d'énergie par capacité, tels que décrits par exemple dans l'article «A New Zero Ripple Switching DC – to DC Converter and Integrated Magnetics» par Slobodan Cùk, CH 1529, 1980, IEEE. La figure 6, où les éléments correspondant à ceux de la figure 1 portent le même numéro de référence, montre la constitution générale d'un convertisseur suivant l'invention à topologie Cùk.

**Revendications**

1. Convertisseur de courant continu en courant continu à découpage, comportant un transformateur dont le secondaire (14), destiné à alimenter une charge, est muni d'un redresseur (16,17) et dont le primaire (12) est prévu pour être relié à une source de tension continue (U) par l'intermédiaire de moyens de commutation statiques (18) permettant de moduler en rapport cyclique la tension appliquée au primaire, par des moyens de commande (20), caractérisé en ce que, les moyens de commutation comportant au moins un élément de commutation statique (22) à état solide associé à un circuit oscillant (26,28), l'inductance (26) est reliée d'un côté à une borne primaire du transformateur et à une armature du condensateur (28) et de l'autre côté à une extrémité de l'élément de commutation, l'autre extrémité de l'élément de commutation est reliée à l'autre armature de condensateur et une diode est branchée en anti-parallèle sur l'élément de commutation.

2. Convertisseur selon la revendication 1, caractérisé en ce que l'élément de commutation statique est un transistor MOS.

3. Convertisseur selon la revendication 1 ou 2, caractérisé en ce que lesdits moyens de commande (20) comportent un amplificateur différentiel (36) qui reçoit sur une entrée une tension représentative d'un paramètre de fonctionnement à régler, et sur l'autre entrée une tension de consigne (Vs) et qui commande un convertisseur tension/fréquence (34) déterminant ladite fréquence variable.

4. Convertisseur selon la revendication 3, caractérisé en ce que lesdits moyens de commande comportent également une bascule (32) dont une entrée reçoit le signal de sortie du convertisseur et l'autre entrée reçoit le signal de sortie d'un élément sensible à l'inversion du sens du courant.

5. Convertisseur selon l'une quelconque des revendications 1 à 4, caractérisé en ce que le circuit oscillant comprend une self en série avec le primaire du transformateur et l'élément de commutation, et un condensateur en parallèle avec l'ensemble de l'élément de commutation et de la self.

## Patentansprüche

1. Gleichspannungsschaltnetzteil mit einem Transformator, dessen Sekundärseite (14) zur Lieferung eines Stromes mit einem Gleichrichter (16,17) versehen ist und dessen Primärseite (12) durch Zwischenschaltung von statischen Kommutierungseinrichtungen (18) mit einer kontinuierlichen Spannungsquelle (U) verbunden ist, deren an die Primärseite angelegte Spannung in einem zyklischen Verhältnis durch Steuerungseinrichtungen (20) modulierbar ist, dadurch gekennzeichnet, dass die Kommutierungseinrichtungen wenigstens ein statisches Kommutierungselement (22) im Festzustand aufweisen, das mit einer oszillierenden Schaltung (26,28) verbunden ist, wobei der induktive Widerstand (26) auf der einen Seite mit einem Anschluss der Primärseite des Transformators und mit einem Anschluss des Kondensators (28) und auf der anderen Seite mit einem Ende des Kommutierungselementes verbunden ist, wobei das andere Ende des Kommutierungselementes mit dem anderen Anschluss des Kondesators verbunden und eine Diode antiparallel zum Kommutierungselement abgezweigt ist.

2. Gleichspannungsschaltnetzteil nach Anspruch 1, dadurch gekennzeichnet, dass das statische Kommutierungselement ein MOS-Transistor ist.

3. Gleichspannungsschaltnetzteil nach Anspruch 1 oder 2, dadurch gekennzeichnet, dass die Steuerungseinrichtungen (20) einen differenziellen Verstärker (36) aufweisen, der an seinem einen Eintritt eine Spannung, die repräsentativ für einen Funktionsparameter zur Regelung ist, und an seinem anderen Eintritt eine Steuerspannung (Vs) aufnimmt und einen Spannungsfrequenzkonverter (34) steuert, der die variable Frequenz bestimmt.

4. Gleichspannungsschaltnetzteil nach Anspruch 3, dadurch gekennzeichnet, dass die Steuerungseinrichtungen auch eine Kippschaltung (32) aufweisen, deren einer Eintritt das Ausgangssignal des Konverters empfängt und deren anderer Eintritt das Ausgangssignal eines auf eine Stromumkehr sensiblen Elementes empfängt.

5. Gleichspannungsschaltnetzteil nach Anspruch 1 oder einem der folgenden, dadurch gekennzeichnet, dass die oszillierende Schaltung eine in Reihe mit der Primärseite des Transformators und dem Kummutierungselement geschaltete Selbstinduktionsspule und einen parallel mit der Anordnung des Kommutierungselementes und der Selbstinduktionsspule geschalteten Kondensator aufweist.

## Claims

1. A modulated DC-to-DC converter comprising a transformer who secondary (14) adapted to supply a load is provided with a rectifier (16,17) and whose primary (12) is adapted to be connected to a DC source (U) through static switching means (18) enabling the cyclic ration of the voltage applied to the primary to be modulated, by control means (20), characterised in that the switching means comprise at least one solidstate static switching element (22) associated with an oscillatory circuit (26,28), the inductance (26) is connected on one side to a primary terminal of the transformer and to one plate of the capacitor (28) and on the other side to one end of the switching element, the other end of the switching element is connected to the other capacitor plate and a diode is connected in anti-parallel with the switching element.

2. A converter according to claim 1, characterised in that the static switching element is an MOS transistor.

3. A converter according to claim 1 or 2, characterised in that the said control means (20) comprise a differential amplifier (36), one input of wich receives a voltage representing an operating parameter which is to be controlled, and the other input of which receives a reference voltage (Vs) and which controls a voltage-frequency converter (34) determining the said variable frequency.

4. A converter according to claim 3, characterised in that the said control means also comprise a flip-flop (32), one input of which receives the converter output signal and the other input of which receives the output signal of an element sensitive to reversal of the direction of the current.

5. A converter according to any one of claims 1 to 4, characterised in that the oscillatory circuit comprises a coil in series with the primary of the transformer and the switching element, and a capacitor in parallel with the system comprising the switching element and the coil.

FIG.1.

FIG.3.

FIG.2A.

FIG.2B.

FIG.2C.

FIG.5.

FIG.4

FIG.6